# EUROPÄISCHE PATENTSCHRIFT

(11) **EP 0 790 414 B1**
(45) Veröffentlichungstag und Bekanntmachung des Hinweises auf die Patenterteilung: **30.08.2000**
(21) Anmeldenummer: 97102209.0
(22) Anmeldetag: 12.02.1997
(51) Int. Cl.: F16B 13/06

(54) **Ankerbolzen mit geschlitzter Spreizhülse**
Anchor bolt with slit expanding sleeve
Boulon d'ancrage avec manchon expensible fendu

(30) Priorität: 13.02.1996 DE 29602513 U
(43) Veröffentlichungstag der Anmeldung: 20.08.1997
(73) Patentinhaber: Berner GmbH, 74653 Künzelsau (DE)
(72) Erfinder: Runge, Erich, 74653 Künzelsau (DE)
(74) Vertreter: Bunke, Holger, Dr.rer.nat. Dipl.-Chem.

(56) Entgegenhaltungen:
- EP-A- 0 514 342
- DE-A- 4 225 869
- US-A- 5 076 733
- US-A- 5 190 423

## Beschreibung

Die Erfindung betrifft ein Verfahren zum Herstellen eines Bolzenankers mit geschlitzter Spreizhülse, mit einem Konus an seinem in Einschlagrichtung vorderen Ende zum Aufweiten der Spreizhülse, einem ein Außengewinde tragenden hinteren Abschnitt und einem gewindelosen mittleren Abschnitt. Weiter betrifft die Erfindung einen entsprechenden Bolzenanker selbst.

Ein derartiger Bolzenanker ist bereits aus der EP 0 514 342 B1 bekannt. Zur Verbesserung des Spreizverhaltens der Spreizhülse hat diese an ihrer Außenseite wenigstens zwei in Längsrichtung hintereinanderliegende, radial vorspringende Haltezapfen. Zur Verringerung der Reibung zwischen dem Konus des Bolzenankers und der Spreizhülse beim Setzen des Bolzenankers weist eine Kontaktfläche zwischen der Spreizhülse und der Außenkontur des Bolzenankers eine reibungsmindernde Beschichtung auf. Diese Beschichtung verteuert jedoch die Herstellung des Bolzenankers.

Aufgabe der Erfindung ist es, ein kostengünstiges Verfahren zum Herstellen eines Bolzenankers mit geschlitzter Spreizhülse und einen kostengünstigen Bolzenanker zu schaffen, der sich durch ein gutes Setzverhalten auszeichnet.

Die Aufgabe wird erfindungsgemäß durch die Merkmale des Anspruchs 1 gelöst. Hierbei ist vorgesehen, daß die Oberfläche der Innenseite der Spreizhülse wenigstens zum Teil eine erhöhte Rauhigkeit aufweist, die durch Funkenerosion erhalten wird. Eine weitere Möglichkeit zur Schaffung dieser Oberfläche besteht darin, ein Prägewerkzeug zu verwenden, das eine funkenerodierte oder geätzte Oberfläche aufweist. Das Prägewerkzeug wird mit dieser Oberfläche auf die Oberfläche der Innenseite aufgepreßt. So kann auf einfache und kostengünstige Weise ein Negativ der Oberfläche des Prägewerkzeugs an der Innenseite der Spreizhülse hergestellt werden. Kostengünstig ist diese zweite Möglichkeit insbesondere deshalb, da ohnehin üblicherweise zur Herstellung der Spreizhülse ein Prägewerkzeug verwendet wird. Das Eindrücken der Oberfläche des Prägewerkzeugs in die Oberfläche der Spreizhülse ist somit ein Nebenprodukt des ohnehin vorgesehenen Prägeverfahrens.

Die Erfindung betrifft darüber hinaus einen Bolzenanker mit geschlitzter Spreizhülse nach Anspruch 3, wobei der Bolzenanker seine Oberfläche mit erhöhter Rauhigkeit auf zumindestens einem Teil der Innenseite der Spreizhülse durch Funkenerosion oder Aufpressen einer funkenerodierten oder geätzten Oberfläche eines Prägewerkzeugs, also durch die zuvor bereits erläuterten Schritte erhalten kann.

Überraschenderweise wurde herausgefunden, daß durch die Erhöhung der Rauhigkeit an der Innenseite der Spreizhülse und die dadurch erzielte geringere Auflagefläche am Bolzenanker die Reibung zwischen Bolzenanker und Spreizhülse beim Setzen des Bolzenankers und so die erforderliche Kraft zur Aufweitung der Spreizhülse durch den Konus verringert wird. Dieser Effekt wird dadurch erklärt, daß sich durch die erhöhte Rauhigkeit eine teilweise Punktauflage zwischen der Innenoberfläche der Spreizhülse und der Außenoberfläche des Bolzenankers, insbesondere dessen Konus, ergibt. Der erfindungsgemäße Bolzenanker weist ein ausgezeichnetes Setzverhalten auf. Eine Beschichtung von Bolzenanker oder Spreizhülse ist damit überflüssig, was die Herstellung des erfindungsgemäßen Bolzenankers verbilligt.

Durch Funkenerodieren lassen sich relativ gleichmäßige und wiederholbare Oberflächenrauhigkeiten erzielen, ohne daß der Bolzenanker dadurch wesentlich verteuert wird.

Vorzugsweise ist der Innendurchmesser der Spreizhülse durch eine Abschrägung an ihrer Innenseite zum Konus hin erweitert, damit sich ein besseres Gleitverhalten der Spreizhülse auf dem Konus beim Setzen des Bolzenankers ergibt. Wenn im Bereich dieser Abschrägung die Innenoberfläche eine erhöhte Rauhigkeit aufweist, ist das Setzverhalten des erfindungsgemäßen Bolzenankers besonders gut, da der Aufweitvorgang der Spreizhülse im Bereich ihrer Abschrägung begonnen wird und die erforderliche Zugkraft zu Beginn des Aufweitvorgangs höher ist.

Das Setzverhalten des Bolzenankers wird noch verbessert, indem die Spreizhülse zumindest einen radial nach innen gerichteten Vorsprung hat. Dadurch wird die Auflagefläche zwischen Spreizhülse und Bolzenanker und damit die auftretende Reibung zwischen diesen Teilen verringert. Auch diesem Merkmal liegt die Idee zugrunde, daß durch Verringerung der Auflagefläche die Reibung zwischen Spreizhülse und Bolzenanker beim Setzen verringert wird.

Gemäß einer bevorzugten Ausführungsform ist der zumindest eine nach innen gerichtete Vorsprung eine Formprägung, was seine Herstellung besonders einfach macht.

In einer weiteren Ausführungsform ist vorgesehen, daß der zumindest eine Vorsprung im Bereich des dem Konus abgewandten Endes der Spreizhülse so formgeprägt ist, daß die zugeordnete Stirnfläche der Spreizhülse an dieser Stelle ausgebuchtet ist. Die Formprägung erfolgt damit so nahe am hinteren Rand der Spreizhülse, daß ihre Stirnfläche nicht mehr eben ist, sondern Ausbuchtungen aufweist. Damit liegt die Spreizhülse auch nicht mehr flächig an einem Absatz am mittleren Abschnitt des Bolzenankers an, welcher ihre axiale Verschiebebewegung beim Einschlagen begrenzt. Das axiale Spiel der Spreizhülse auf dem Bolzenanker wird dadurch verringert, und die Spreizhülse wird beim Setzen, wenn der Bolzenanker teilweise aus dem Bohrloch herausgezogen wird, früher aufgeweitet. Insbesondere, wenn gemäß einer bevorzugten Ausführungsform zumindest drei am Umfang der Spreizhülse gleichmäßig verteilte Vorsprünge vorgesehen sind, ergibt sich ein geringes Spiel zwischen der Spreizhülse und dem Bolzenanker in radialer Richtung, und die Reibung der Spreizhülse auf dem Bolzenanker wird durch die so geschaffene Dreipunktauflage weiter reduziert. Die Dreipunktauflage gleicht zudem Toleranzen zwischen der Spreizhülse und dem Bolzenanker aus, was für die Montage vorteilhaft ist. Die Spreizhülse sitzt nämlich durch das Vorsehen der Vorsprünge annähernd koaxial zum Bolzenanker und damit zum Konus, so daß ein Verkanten der Spreizhülse auf dem Konus ausgeschlossen wird.

Gemäß einer Ausgestaltung der Erfindung sind an der Außenseite der Spreizhülse im Bereich des dem Konus zugewandten Endes zumindest ein radial nach außen abstehender vorderer Haltezapfen und zumindest ein axial von diesem beabstandeter hinterer Haltezapfen vorgesehen. Diese Haltezapfen stehen radial gegenüber dem Außenumfang des Konus vor und dringen beim Einschlagen des Bolzenankers in ein Bohrloch in ein Mauerwerk ein. Dadurch wird die Spreizhülse beim anschließenden Setzvorgang in dem Mauerwerk gehalten, wodurch sich der Konus in sie hineinschieben kann. Das Vorsehen von zwei Haltezapfen erhöht die Haltekraft der Spreizhülse im Mauerwerk.

Die Haltekraft kann nochmals gesteigert werden, wenn, gemäß einer bevorzugten Ausführungsform, der zumindest eine vordere und eine hintere Haltezapfen in axialer Richtung winkelversetzt zueinander angeordnet sind, was bei dem Bolzenanker nach der EP 0 514 342 B1 gerade nicht der Fall ist. Durch die Winkelversetzung des vorderen zum hinteren Haltezapfen kann es nicht vorkommen, daß der hintere Haltezapfen bereits in einer beim Einschlagvorgang vom vorderen Haltezapfen im Mauerwerk ausgeformten Mulde zu liegen kommt, wodurch sich die durch den hinteren Haltezapfen ergebende Haltekraft deutlich verringern würde. Die Rückhaltung der Spreizhülse beim erfindungsgemäßen Bolzenanker wird so nochmals deutlich verbessert.

Vorzugsweise ist der hintere Haltezapfen im Bereich des dem Konus abgewandten Endes der Spreizhülse angeordnet. Weiter weist der Haltezapfen gemäß der bevorzugten Ausführungsform eine durch Formprägung entstandene Keilform auf, die ein besseres Führungsverhalten der Spreizhülse beim Einschlagen im Mauerwerk bietet als dies beispielsweise bei der abgerundeten, teilweise sogar kugelförmigen Ausbildung des Haltezapfens in der EP 0 514 342 B1 der Fall ist. Durch die Keilform gräbt sich der Haltezapfen bei geringerer erforderlicher Einschlagkraft eine mehr oder weniger tiefe lineare Furche in das Mauerwerk.

Um zu verhindern, daß sich ein scharfkantiger Rand an einer durch die Formprägung des vorderen Haltezapfens entstehenden Einbuchtung an der Innenseite der Spreizhülse beim Setzen des Bolzenankers in den Konus eingräbt, wodurch die erforderliche axiale Kraft zum Setzen deutlich erhöht werden würde, ist die Einbuchtung vorzugsweise zumindest teilweise zum nicht eingebuchteten Bereich hin abgeschrägt oder abgerundet.

Zur Erhöhung der Rückhaltekraft der Spreizhülse können weitere Merkmale vorgesehen sein, beispielsweise indem mehrere jeweils auf gleicher axialer Höhe liegende, auf einem Umfang gleichmäßig verteilte vordere und hintere Haltezapfen vorhanden sind oder indem ein dem Konus abgewandter äußerer Rand der Haltezapfen scharfkantig ausgebildet ist. Gerade durch das letztgenannte Merkmal ergibt sich eine bessere Rückhaltung und ein leichteres Aufweiten der Spreizhülse.

Üblicherweise ist die Spreizhülse mit einem durchgehenden sowie zumindest einem nicht durchgehenden axialen Schlitz versehen, so daß sich sogenannte Spreizlappen zwischen den Schlitzen ergeben. Da der vordere Haltezapfen an Spreizlappen vorgesehen ist, ist vorzugsweise der hintere Haltezapfen in axialer Richtung im Bereich hinter einem axial nicht durchgehenden Schlitz angeordnet, wodurch die Winkelversetzung der Haltezapfen zueinander groß ist.

Gemäß einer bevorzugten Ausführungsform ist ein keilförmiger hinterer Haltezapfen im Bereich des axial durchgehenden Schlitzes zweigeteilt, so daß ein erster Teil des Haltezapfens auf einem Umfangsende und ein zweiter Teil des Haltezapfens auf dem gegenüberliegenden Umfangsende der Spreizhülse vorgesehen ist. Beim Einschlagen des Bolzenankers ergibt sich durch den zweigeteilten Haltezapfen eine Keilwirkung, die bewirkt, daß sich die Umfangsenden des Haltezapfens in Umfangsrichtung aufeinander zu bewegen und die Breite des axial durchgehenden Schlitzes verringern. Damit verringert sich der Innendurchmesser der Spreizhülse, und diese sitzt mit noch weniger Spiel auf dem Bolzenanker und kann durch den noch früher auf sie einwirkenden Konus bei geringer axialer Verschiebung des Bolzenankers bereits aufgeweitet werden.

Beim Einschlagen des Bolzenankers besteht stets die Gefahr, daß die Spreizlappen so verformt werden, daß sie nicht mehr exakt axial und damit parallel zueinander, sondern verdreht zueinander angeordnet sind. Dies kann vermieden werden, wenn gemäß einer bevorzugten Ausführungsform im Bereich jedes Schlitzes ein in Umfangsrichtung wirkender, stegförmiger, die Breite des Schlitzes verringernder Abstandhalter vorgesehen ist, durch den die einzelnen Spreizlappen exakter zueinander angeordnet sind. Damit ist auch gewährleistet, daß die Form der Spreizhülse annähernd zylindrisch bleibt, selbst nach dem Einschlagen des Bolzenankers.

Ist die Außenoberfläche der Spreizhülse zumindest teilweise angerauht, sitzt diese fester im Bohrloch. Dieses Anrauhen der Außenoberfläche der Spreizhülse erfolgt vorzugsweise zumindest im Bereich ihres dem Konus zugewandten Endes durch Funkenerodieren. Darüber hinaus kann dieser Bereich der Spreizhülse auch ein Negativ einer funkenerodierten Oberfläche eines zur Herstellung der Spreizhülse verwendeten Prägewerkzeugs sein.

Die Erfindung wird nachfolgend unter Bezugnahme auf eine bevorzugte Ausführungsform erläutert, die in den beigefügten Zeichnungen dargestellt ist. In diesen ist:
- Fig. 1: eine Seitenansicht des erfindungsgemäßen Bolzenankers mit geschlitzter Spreizhülse,
- Fig. 2: eine Draufsicht auf die Innenseite der noch nicht über den Bolzenanker zylindrisch geformten Spreizhülse nach Fig. 1,
- Fig. 3: eine Schnittansicht nach der Linie A-A in Fig. 2, und
- Fig. 4: die noch nicht vollständig zylindrisch gebogene Spreizhülse nach Fig. 2.

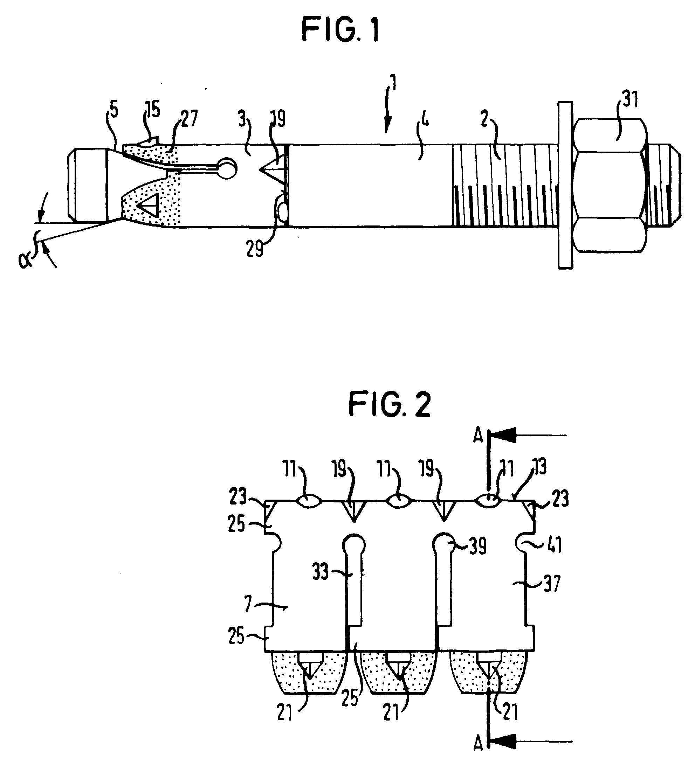

In Fig. 1 ist ein Bolzenanker 1 gezeigt, der in Einschlagrichtung ein vorderes Ende mit einem Konus 5 aufweist, an den sich ein in Fig. 1 nicht zu erkennender Schaftbereich mit einem verringerten Außendurchmesser anschließt, um den eine Spreizhülse 3 angeordnet ist. Der Schaftbereich mit verringertem Außendurchmesser endet an einem stufenförmigen Absatz 29, an den sich ein gewindeloser mittlerer Abschnitt 4 und an diesen wiederum ein ein Außengewinde 2 tragender hinterer Abschnitt anschließt, auf den eine Mutter 31 aufdrehbar ist, wobei üblicherweise noch eine Beilagscheibe auf den hinteren Abschnitt aufgeschoben ist.

Die Herstellung der Spreizhülse 3 erfolgt durch Stanzen aus einem Blech, welches anschließend noch bearbeitet wird. Die Spreizhülse 3, welche zylindrisch um den Abschnitt mit verringertem Außendurchmesser gebogen ist, weist einen durchgehenden Schlitz sowie, wie in Fig. 2 besser zu erkennen ist, zwei axial nicht durchgehende Schlitze 33 auf. Durch den durchgehenden Schlitz und die nicht durchgehenden Schlitze 33 ergeben sich drei Spreizlappen, von denen einer mit 37 bezeichnet ist. Die Spreizlappen 37 laufen, in Draufsicht betrachtet, an ihrem vorderen Ende leicht zu. Am vorderen Ende desjenigen Bereichs der Spreizlappen 37, der noch parallele Seitenflächen aufweist, haben die Spreizlappen 37 angeformte Abstandhalter 25, die den Schlitz 33 zum benachbarten Spreizlappen 37 deutlich verringern. Während der Abstand zum benachbarten Spreizlappen 37 im Bereich axial nicht durchgehender Schlitze 33 durch lediglich einen angeformten Abstandhalter 25 verringert wird, ist der entsprechende Abstandhalter 25 für den durchgehenden Schlitz, welcher durch die linken und rechten Außenseiten der in Fig. 2 gezeigten Spreizhülse 3 nach dem Biegen gebildet wird, aufgeteilt, so daß nach dem Biegen ein Teil des Abstandhalters 25 an einem Umfangsende und der andere Teil am gegenüberliegenden Umfangsende angeformt ist. Ein weiterer geteilter Abstandhalter 25 ist auch am hinteren Ende der Spreizhülse 3 vorgesehen. Jeder nicht durchgehende Schlitz 33 läuft an seinem hinteren Ende in einer kreisförmigen Öffnung 39 aus, deren Durchmesser größer als die Breite des übrigen Schlitzes 33 ist. An den entsprechenden Stellen an den Außenseiten des durchgehenden Schlitzes sind entsprechende Ausbuchtungen 41 vorgesehen. Die Öffnungen 39 und die Ausbuchtungen 41 führen zu einer Querschnittsverringerung der Spreizlappen 37, welche sich dadurch im Bereich des Konus 5 leichter aufspreizen lassen.

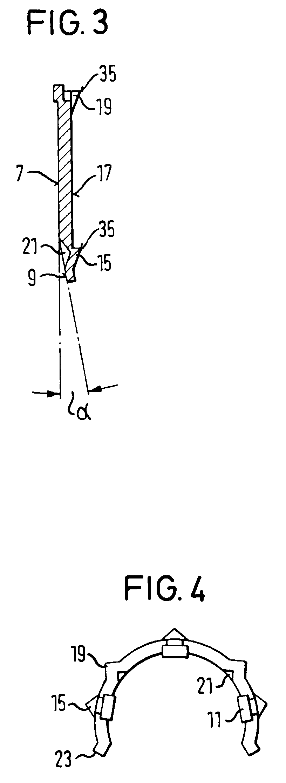

Nach dem Stanzen der Spreizhülse 3 wird diese durch Formprägen weiterbearbeitet. Dabei werden die vorderen, leicht konisch zulaufenden Enden der Spreizlappen 37 im Bereich der Innenseite 7 der Spreizhülse 3 mit einer in Fig. 3 erkennbaren Abschrägung 9 versehen, welche einen Abschrägungswinkel α aufweist, der dem Konuswinkel α entspricht. Im Bereich der Abschrägung 9 erhält die Innenseite 7 der Spreizhülse 3 durch das Formprägen eine Innenoberfläche, welche eine erhöhte Rauhigkeit und eine höhere Rauhigkeit als die übrige Innenoberfläche der Spreizhülse 3 aufweist. Dies geschieht dadurch, daß das Prägewerkzeug im zugeordneten Bereich eine funkenerodierte Oberfläche mit erhöhter Rauhigkeit aufweist, welche sich in die Innenoberfläche der Spreizhülse 3 eindrückt, so daß diese ein Negativ der vorzugsweise durch Funkenerodieren bearbeiteten Oberfläche des Prägewerkzeugs ist.

Darüber hinaus ist es möglich, die Spreizhülse 3 in diesem Bereich selbst durch Funkenerodieren zu bearbeiten. Der der Innenseite 7 der Spreizhülse 3 mit rauherer Innenoberfläche entsprechende Bereich 27 auf einer Außenseite 17 der Spreizhülse 3 weist eine Außenoberfläche auf, welche ebenfalls angerauht ist, indem das entsprechend angreifende Prägewerkzeug mit einer funkenerodierten Oberfläche in diesem Bereich ausgestattet ist. Auch können die Innenseite 7 und die Außenseite 17 oder ein Prägewerkzeug in entsprechenden Bereichen z.B. mechanisch so bearbeitet werden, daß sich eine erhöhte Rauhigkeit an der Innenseite 7 oder der Außenseite 17 der Spreizhülse 3 ergibt.

Jeder Spreizlappen 37 hat in seinem vorderen Bereich, mittig zum Spreizlappen 37 selbst, einen vorderen Haltezapfen 15 an der Außenseite 17, welcher durch Formprägen entsteht, so daß an der entsprechenden Stelle an der Innenseite 7 eine Einbuchtung 21 vorhanden ist, die zumindest teilweise und insbesondere an ihrem hinteren Ende zum nicht eingebuchteten Bereich abgeschrägt oder abgerundet ist, so daß sich beim späteren Setzen des Bolzenankers 1 ein besseres Gleiten der Spreizhülse 3 auf dem Konus 5 ergibt.

Im Bereich des hinteren Endes der Spreizhülse 3, das im um den Bolzenanker 1 herum gebogenen Zustand dem Konus 5 abgewandt ist, sind hintere Haltezapfen 19 vorgesehen, die an der Außenseite 17 radial vorstehen. Zwei Haltezapfen 19 sind in axialer Richtung im Bereich hinter einem axial nicht durchgehenden Schlitz 33 angeordnet, wogegen ein hinterer Haltezapfen 23 durch den durchgehenden Schlitz zweigeteilt ist, so daß ein erster Teil auf einem Umfangsende und ein zweiter Teil des Haltezapfens 23 auf dem gegenüberliegenden Umfangsende ausgebildet ist. Die Haltezapfen 15, 19 und 23 haben, in der Draufsicht betrachtet, eine Keilform und bilden, räumlich betrachtet, eine Teilpyramide oder einen Teilkegel.

Bei fertig auf dem Bolzenanker 1 montierter Spreizhülse 3 liegen somit die drei vorderen und die drei hinteren Haltezapfen 15 bzw. 19, 23 auf gleicher axialer Höhe und sind auf einen Umfang gleichmäßig verteilt. Dadurch, daß die vorderen Haltezapfen 15 an den Spreizlappen 37 sowie die hinteren Haltezapfen, axial gesehen, im Bereich der Schlitze 33 angeordnet sind, ergibt sich eine in axialer Richtung gesehen maximale Winkelversetzung der Haltezapfen 15 und 19, 23 zueinander.

Im Bereich des dem Konus 5 abgewandeten Endes der Spreizhülse 3 sind axial hinter den vorderen Haltezapfen 15 radial nach innen gerichtete Vorsprünge 11 vorgesehen, die durch Formprägung entstanden sind. Die Vorsprünge 11 sind so weit am Ende der Spreizhülse 3 vorhanden, daß eine Stirnfläche 13 der Spreizhülse 3, welche in montiertem Zustand dem Absatz 29 zugewandt ist, durch die Formprägung der Vorsprünge 11 Ausbuchtungen erhält, so daß die Spreizhülse 3 axial nicht flächig am Absatz 29, sondern nur an drei Punkten an diesem anliegt.

Nach dem Formprägen der Spreizhülse 3 wird diese um den Bereich des Bolzenankers 1 gebogen, welcher einen verringerten Außendurchmesser hat. Fig. 4 zeigt die Spreizhülse 3 in teilweise gebogenem Zustand.

Im folgenden wird das Setzen des Bolzenankers in eine Außenfassade eines Gebäudes beschrieben. Der Bolzenanker 1 wird hierzu in ein Bohrloch eingeschlagen, wobei die Spreizhülse 3 während des Einschlagens aufgrund ihres axialen Spiels zum Bolzenanker 1 nach hinten wandert, bis die Vorsprünge 11 am Absatz 29 anschlagen. Die Vorsprünge 11 verringern nicht nur das radiale Spiel der Spreizhülse 3 zum Bolzenanker 1, sondern auch deren axiales Spiel, so daß die Verschiebung der Spreizhülse 3 relativ zum Bolzenanker 1 beim Einschlagen gering ist. Während des Einschlagens werden durch die vorderen Haltezapfen 15, die gegen die Bohrlochwandung drücken, die Spreizlappen 37 radial nach innen gedrückt, so daß die Schlitze im Bereich der Abstandhalter zum Teil 25 verschwinden. Die Spreizlappen 37 werden damit nicht zu dem Bolzenanker 1 verdreht und bleiben parallel zueinander ausgerichtet. Während des Einschlagens graben sich die Haltezapfen 15, 19 und 23 teilweise in das Mauerwerk ein, wobei durch ihre Keilform eine gute Führung der Spreizhülse 3 erreicht wird. Beim Einschlagen drückt der geteilte hintere Haltezapfen 23 die gegenüberliegenden Umfangsenden aufgrund der durch seine Form hervorgerufenen Keilwirkung zusammen, so daß der durchgehende Schlitz im Bereich der Abstandhalter 25 ebenfalls zumindest fast verschwindet. In eingeschlagenem Zustand weist die Spreizhülse 3 somit einen geringeren Außendurchmesser als in nicht eingeschlagenem Zustand auf.

Nachdem der Bolzenanker 1 vollständig in das Mauerwerk eingetrieben worden ist, wird durch Drehen der Mutter 31 eine nach hinten gerichtete Zugkraft erzeugt, so daß der Bolzenanker 1 geringfügig aus dem Mauerwerk geschoben wird. Der Konus 5 wandert damit in Richtung der Spreizhülse 3, bis er die Abschrägung 9 der Spreizhülse 3 berührt. Anschließend gleitet die Spreizhülse 3 auf der Konusoberfläche entlang radial nach außen, wobei die auftretende Reibungskraft zwischen Spreizhülse 3 und Konus 5 durch die Innenoberfläche mit höherer Rauhigkeit relativ geringgehalten werden kann. Auch die nach innen gerichteten Vorsprünge 11 reduzieren die auftretende Reibung.

Ein Herausziehen der Spreizhülse 3 aus dem Bohrloch wird durch die Haltezapfen 15, 19 und 23 verhindert, wobei eine scharfkantige Ausbildung von äußeren Rändern 35 der Haltezapfen 15, 19 und 23, die dem Konus 5 abgewandt sind, sowie die angerauhte Außenoberfläche im Bereich 27 die Halterung der Spreizhülse 3 im Bohrloch fördert.

Bei weiterem Anziehen der Mutter 21 wandert der Konus 5 schließlich so weit nach rechts, daß die Spreizhülse 3 teilweise über diesen geschoben und der Bolzenanker 1 sicher im Bohrloch arretiert wird.

## Patentansprüche

1. Verfahren zum Herstellen eines Bolzenankers mit geschlitzter Spreizhülse (3), die aus einem Blechteil gefertigt ist, wobei der Bolzenanker mit einem Konus (5) an seinem in Einschlagrichtung vorderen Ende zum Aufweiten der Spreizhülse (3), einem ein Außengewinde (2) tragenden hinteren Abschnitt und einem gewindelosen mittleren Abschnitt (4) versehen ist, dadurch gekennzeichnet, daß zumindest auf einem Teil der Oberfläche der Innenseite (7) der Spreizhülse (3) die Rauhigkeit der Oberfläche erhöht wird.

2. Verfahren nach Anspruch 1, dadurch gekennzeichnet, daß der Teil der Oberfläche der Innenseite zur Erhöhung der Rauhigkeit funkenerodiert wird oder ein Prägewerkzeug mit einer funkenerodierten oder geätzten Oberfläche auf diesen Teil der Oberfläche der Innenseite (7) aufgepreßt wird.

3. Verfahren nach Anspruch 1 oder 2, dadurch gekennzeichnet, daß die Spreizhülse (3) zumindest im Bereich (27) ihres dem Konus (5) zugewandten Endes eine Außenoberfläche hat, die durch Funkenerosion bearbeitet worden ist oder daß ein Prägewerkzeug mit funkenerodierter Oberfläche zur Schaffung eines Negativs auf der Oberfläche der Spreizhülse auf die Spreizhülse aufgepreßt wird.

4. Bolzenanker mit geschlitzter Spreizhülse (3), mit einem Konus (5) an seinem in Einschlagrichtung vorderen Ende zum Aufweiten der Spreizhülse (3), einem ein Außengewinde (2) tragenden hinteren Abschnitt und einem gewindelosen mittleren Abschnitt (4), dadurch gekennzeichnet, daß eine Oberfläche mit erhöhter Rauhigkeit an zumindest einem Teil der Innenseite (7) der Spreizhülse (3) durch Funkenerosion oder durch Aufpressen einer funkenerodierten oder geätzten Oberfläche eines Prägewerkzeugs erhältlich ist.

5. Bolzenanker nach Anspruch 4, dadurch gekennzeichnet, daß sich der Innendurchmesser der Spreizhülse (3) durch eine Abschrägung (9) an ihrer Innenseite (7) zum Konus (5) hin erweitert und im Bereich der Abschrägung (9) die Innenoberfläche mit erhöhter Rauhigkeit vorgesehen ist.

6. Bolzenanker mit geschlitzter Spreizhülse (3) nach Anspruch 4 oder 5, wobei der Bolzenanker (1) an seinem in Einschlagrichtung vorderen Ende einen Konus (5) zum Aufweiten der Spreizhülse (3) sowie einen ein Außengewinde (2) tragenden hinteren Abschnitt und einen gewindelosen mittleren Abschnitt (4) aufweist, dadurch gekennzeichnet, daß die Spreizhülse (3) zumindest einen radial nach innen gerichteten Vorsprung (11) hat.

7. Bolzenanker nach Anspruch 6, dadurch gekennzeichnet, daß der zumindest eine Vorsprung (11) eine Formprägung ist.

8. Bolzenanker nach Anspruch 6 oder 7, dadurch gekennzeichnet, daß der zumindest eine Vorsprung (11) im Bereich des dem Konus (5) abgewandten Endes der Spreizhülse (3) so formgeprägt ist, daß die zugeordnete Stirnfläche (13) der Spreizhülse (3) an dieser Stelle ausgebuchtet ist.

9. Bolzenanker nach einem der Ansprüche 6 bis 8, dadurch gekennzeichnet, daß zumindest drei am Umfang der Spreizhülse (3) gleichmäßig verteilte Vorsprünge (11) vorgesehen sind.

10. Bolzenanker nach einem der Ansprüche 4 bis 9, dadurch gekennzeichnet, daß an der Außenseite (17) der Spreizhülse (3) im Bereich des dem Konus (5) zugewandten Endes zumindest ein radial nach außen abstehender vorderer Haltezapfen (15) und zumindest ein axial von diesem beabstandeter hinterer Haltezapfen (19, 23) vorgesehen sind.

11. Bolzenanker nach Anspruch 10, dadurch gekennzeichnet, daß der zumindest eine vordere und zumindest eine hintere Haltezapfen (15, 19, 23) in axialer Richtung winkelversetzt zueinander angeordnet sind.

12. Bolzenanker nach Anspruch 10 oder 11, dadurch gekennzeichnet, daß der hintere Haltezapfen (19, 23) im Bereich des dem Konus (5) abgewandten Endes der Spreizhülse (3) angeordnet ist.

13. Bolzenanker nach einem der Ansprüche 10 bis 12, dadurch gekennzeichnet, daß die Haltezapfen (15, 19, 23) eine durch Formprägung entstandene Keilform aufweisen.

14. Bolzenanker nach Anspruch 13, dadurch gekennzeichnet, daß eine durch die Formprägung der Haltezapfen (15, 19, 23) entstandene Einbuchtung (21) an der Innenseite (7) zumindest teilweise zum nicht eingebuchteten Bereich hin abgeschrägt oder abgerundet ist.

15. Bolzenanker nach einem der Ansprüche 10 bis 14, dadurch gekennzeichnet, daß mehrere jeweils auf gleicher axialer Höhe liegende, auf einem Umfang gleichmäßig verteilte vordere und hintere Haltezapfen (15, 19, 23) vorgesehen sind.

16. Bolzenanker nach einem der Ansprüche 10 bis 15, dadurch gekennzeichnet, daß der zumindest eine hintere Haltezapfen (19) in axialer Richtung im Bereich hinter einem axial nicht durchgehenden Schlitz (33) angeordnet ist.

17. Bolzenanker nach einem der Ansprüche 10 bis 16, dadurch gekennzeichnet, daß ein keilförmiger hinterer Haltezapfen (23) im Bereich eines axial durchgehenden Schlitzes zweigeteilt ist und ein erster Teil des Haltezapfens (23) auf einem Umfangsende und ein zweiter Teil des Haltezapfens (23) auf dem gegenüberliegenden Umfangsende vorgesehen ist.

18. Bolzenanker nach einem der Ansprüche 10 bis 17, dadurch gekennzeichnet, daß ein dem Konus (5) abgewandter äußerer Rand (35) der Haltezapfen (15, 19, 23) scharfkantig ausgebildet ist.

19. Bolzenanker nach einem der Ansprüche 4 bis 18, dadurch gekennzeichnet, daß im Bereich jedes Schlitzes (33) ein in Umfangsrichtung wirkender, stegförmiger, die Breite des Schlitzes (33) verringernder Abstandhalter (25) vorgesehen ist.

20. Bolzenanker nach einem der Ansprüche 4 bis 19, dadurch gekennzeichnet, daß die Außenoberfläche der Spreizhülse (3) zumindest teilweise angerauht ist.

21. Bolzenanker nach Anspruch 20, dadurch gekennzeichnet, daß die Spreizhülse (3) zumindest im Bereich (27) ihres dem Konus (5) zugewandten Endes eine funkenerodierte Außenoberfläche aufweist oder daß mindestens dieser Bereich (27) ein Negativ einer funkenerodierten Oberfläche eines zur Herstellung der Spreizhülse (3) verwendeten Prägewerkzeugs ist.

## Claims

1. A method of fabricating an anchoring bolt having a slit expansion sleeve (3) manufactured from a sheet metal part, the anchoring bolt being provided with a cone (5) at its front end in the driving-in direction for widening the expansion sleeve (3), a rear portion bearing an external thread (2), and a threadless central portion (4), characterized in that the roughness of the surface is increased at least on a portion of the surface of the inner side (7) of the expansion sleeve (3).

2. The method according to claim 1, characterized in that for increasing the roughness the portion of the surface of the inner side is machined by spark erosion or by pressing a stamping tool having a spark-eroded or etched surface onto this portion of the surface of the inner side (7).

3. The method according to claim 1 or 2, characterized in that at least in the region (27) of its end facing the cone (5), the expansion sleeve (3) has an outer surface which has been machined by spark erosion or that a stamping tool having a spark-eroded surface is pressed onto the expansion sleeve to create a negative on the surface of the expansion sleeve.

4. An anchoring bolt having a slit expansion sleeve (3), a cone (5) at its front end in the driving-in direction for widening the expansion sleeve (3), a rear portion bearing an external thread (2), and a threadless central portion (4), characterized in that a surface with an increased roughness can be obtained on at least a portion of the inner side (7) of the expansion sleeve (3) by spark erosion or by pressing a spark-eroded or etched surface of a stamping tool thereon.

5. The anchoring bolt according to claim 4, characterized in that the inside diameter of the expansion sleeve (3) becomes wider towards the cone (5) due to a chamfer (9) on its inner side (7), and that the inside surface with increased roughness is provided in the region of the chamfer (9).

6. The anchoring bolt having a slit expansion sleeve (3) according to claim 4 or 5, the anchoring bolt (1) having a cone (5) at its front end in the driving-in direction for widening the expansion sleeve (3) as well as a rear portion bearing an external thread (2) and a threadless central portion (4), characterized in that the expansion sleeve (3) has at least one protrusion (11) directed radially inwards.

7. The anchoring bolt according to claim 6, characterized in that the at least one protrusion (11) is a shaped stamping.

8. The anchoring bolt according to claim 6 or 7, characterized in that in the region of the end of the expansion sleeve (3) facing away from the cone (5) the at least one protrusion (11) is shaped by stamping such that the associated end face (13) of the expansion sleeve (3) is bulged at this point.

9. The anchoring bolt according to any one of claims 6 to 8, characterized in that at least three protrusions (11) are provided which are evenly distributed about the periphery of the expansion sleeve (3).

10. The anchoring bolt according to any one of claims 4 to 9, characterized in that at least one front retaining pin (15) projecting radially outwards and at least one rear retaining pin (19, 23) axially spaced therefrom are provided on the outside (17) of the expansion sleeve (3) in the region of the end facing the cone (5).

11. The anchoring bolt according to claim 10, characterized in that the at least one front and the at least one rear retaining pins (15, 19, 23) are arranged angularly offset in relation to each other in the axial direction.

12. The anchoring bolt according to claim 10 or 11, characterized in that the rear retaining pin (19, 23) is arranged in the region of the end of the expansion sleeve (3) facing away from the cone (5).

13. The anchoring bolt according to any one of claims 10 to 12, characterized in that the retaining pins (15, 19, 23) have a wedge shape produced by being stamped into shape.

14. The anchoring bolt according to claim 13, characterized in that an indentation (21) on the inner side (7) produced by the retaining pins (15, 19, 23) being stamped into shape is at least partially chamfered or rounded towards the region which is not indented.

15. The anchoring bolt according to any one of claims 10 to 14, characterized in that several front and rear retaining pins (15, 19, 23) are provided which are each located at the same axial level and evenly distributed about a periphery.

16. The anchoring bolt according to any one of claims 10 to 15, characterized in that the at least one rear retaining pin (19) is arranged in the axial direction in the region behind a slit (33) which is not full-length axially.

17. The anchoring bolt according to any one of claims 10 to 16, characterized in that a wedge-shaped rear retaining pin (23) is divided into two in the region of an axially full-length slit and a first part of the retaining pin (23) is provided on one peripheral end and a second part of the retaining pin (23) is provided on the opposite peripheral end.

18. The anchoring bolt according to any one of claims 10 to 17, characterized in that an outer edge (35) of the retaining pins (15, 19, 23) facing away from the cone (5) is designed with a sharp edge.

19. The anchoring bolt according to any one of claims 4 to 18, characterized in that in the region of each slit (33) a web-shaped spacer (25) is provided acting in the peripheral direction and reducing the width of the slit (33).

20. The anchoring bolt according to any one of claims 4 to 19, characterized in that the outer surface of the expansion sleeve (3) is roughened at least in part.

21. The anchoring bolt according to claim 20, characterized in that at least in the region (27) of its end facing the cone (5) the expansion sleeve (3) has an outer surface machined by spark erosion or that at least this region (27) is a negative of a spark-eroded surface of a stamping tool used to fabricate the expansion sleeve (3).

## Revendications

1. Procédé de fabrication d'un boulon d'ancrage avec manchon expansible (3) fendu réalisé à partir d'une pièce de tôle, le boulon d'ancrage étant pourvu d'un cône (5) sur son extrémité antérieure en direction d'enfoncement pour évaser le manchon expansible (3), d'un tronçon postérieur portant un filetage (2) et d'un tronçon médian (4) dépourvu de filetage, caractérisé en ce que la rugosité de la surface est accrue au moins sur une partie de la surface de la face intérieure (7) du manchon expansible (3).

2. Procédé selon la revendication 1, caractérisé en ce que pour accroître la rugosité, la partie de la surface de la face intérieure est usinée par électroérosion ou en pressant un outil de matriçage à surface usinée par électroérosion ou par attaque chimique sur cette partie de la surface de la face intérieure (7).

3. Procédé selon la revendication 1 ou 2, caractérisé en ce que le manchon expansible (3) a au moins dans la région (27) de son extrémité détournée du cône (5) une surface extérieure qui a été usinée par électroérosion ou en ce qu'un outil de matriçage à surface usinée par électroérosion est pressé sur le manchon expansible pour réaliser un négatif sur la surface du manchon expansible.

4. Boulon d'ancrage avec manchon expansible (3) fendu comportant un cône (5) sur son extrémité antérieure en direction d'enfoncement pour évaser le manchon expansible (3), un tronçon postérieur portant un filetage (2) et un tronçon médian (4) dépourvu de filetage, caractérisé en ce qu'une surface à rugosité accrue peut être obtenue sur au moins une partie de la face intérieure (7) du manchon expansible (3) par électroérosion ou en pressant une surface usinée par électroérosion ou par attaque chimique d'un outil de matriçage.

5. Boulon d'ancrage selon la revendication 4, caractérisé en ce que le diamètre intérieur du manchon expansible (3) est évasé vers le cône (5) par un chanfrein (9) sur sa face intérieure (7) et en ce que dans la région du chanfrein (9), la surface intérieure est prévue avec une rugosité accrue.

6. Boulon d'ancrage avec manchon d'expansion (3) fendu selon les revendications 4 ou 5, le boulon d'ancrage (1) présentant un cône (5) sur son extrémité antérieure en direction d'enfoncement pour évaser le manchon expansible (3), ainsi qu'un tronçon postérieur portant un filetage (2) et un tronçon médian (4) dépourvu de filetage, caractérisé en ce que le manchon expansible (3) possède au moins une saillie (11) tournée radialement vers l'intérieur.

7. Boulon d'ancrage selon la revendication 6, caractérisé en ce que ladite au moins une saillie (11) est un façonnage par matriçage.

8. Boulon d'ancrage selon la revendication 6 ou 7, caractérisé en ce que dans la région de l'extrémité du manchon expansible (3) détournée du cône (5), ladite au moins une saillie (11) est façonnée par matriçage de telle sorte que la surface frontale (13) associée du manchon expansible (3) est emboutie à cet endroit.

9. Boulon d'ancrage selon l'une quelconque des revendication 6 à 8, caractérisé en ce qu'il est prévu au moins trois saillies (11) réparties de manière régulière sur la périphérie du manchon expansible (3).

10. Boulon d'ancrage selon l'une quelconque des revendication 4 à 9, caractérisé en ce qu'au moins un tenon de retenue (15) antérieur faisant radialement saillie vers l'extérieur et au moins un tenon de retenue (19, 23) postérieur situé axialement à distance de celui-ci sont prévus dans la région de l'extrémité tournée vers le cône (5).

11. Boulon d'ancrage selon la revendication 10, caractérisé en ce que lesdits au moins uns tenons de retenue antérieurs et postérieurs (15, 19, 23) sont agencés en décalage angulaire les uns par rapport aux autres en direction axiale.

12. Boulon d'ancrage selon la revendication 10 ou 11, caractérisé en ce que le tenon de retenue postérieur (19, 23) est agencé dans la région de l'extrémité du manchon expansible (3) qui est détournée du cône (5).

13. Boulon d'ancrage selon l'une quelconque des revendications 10 à 12, caractérisé en ce que les tenons de retenue (15, 19, 23) présentent une forme de coin réalisée par façonnage par matriçage.

14. Boulon d'ancrage selon la revendication 13, caractérisé en ce qu'un creux (21) réalisé par façonnage par matriçage des tenons (15, 19, 23) est au moins partiellement chanfreiné ou arrondi sur la face intérieure (7) vers la région non creusée.

15. Boulon d'ancrage selon l'une quelconque des revendications 10 à 14, caractérisé en ce qu'il est prévu plusieurs tenons de retenue (15, 19, 23) antérieurs et postérieurs situés chacun à même hauteur axiale et répartis de manière régulière sur une périphérie.

16. Boulon d'ancrage selon l'une quelconque des revendications 10 à 15, caractérisé en ce que le moins un tenon de retenue postérieur (19) est agencé en direction axiale dans la région située derrière une fente (33) qui n'est axialement pas traversante.

17. Boulon d'ancrage selon l'une quelconque des revendications 10 à 16, caractérisé en ce qu'un tenon de retenue (23) postérieur en forme de coin est divisé en deux dans la région d'une fente axialement traversante et en ce qu'il est prévu une première partie du tenon de retenue (23) sur une extrémité périphérique et une seconde partie du tenon de retenue (23) sur l'extrémité périphérique opposée.

18. Boulon d'ancrage selon l'une quelconque des revendications 10 à 17, caractérisé en ce qu'un bord extérieur (35) du tenon de retenue (15, 19, 23), détourné du cône (5), est réalisé à arête vive.

19. Boulon d'ancrage selon l'une quelconque des revendications 4 à 18, caractérisé en ce que dans la région de chaque fente (33), il est prévu un écarteur (25) en forme de traverse agissant en direction périphérique et réduisant la largeur de la fente (33).

20. Boulon d'ancrage selon l'une quelconque des revendications 4 à 19, caractérisé en ce que la surface extérieure du manchon expansible (3) est au moins partiellement rendue rugueuse.

21. Boulon d'ancrage selon la revendication 20, caractérisé en ce que le manchon expansible (3) présente au moins dans la région (27) de son extrémité détournée du cône (5) une surface extérieure usinée par électroérosion ou en ce qu'au moins cette région (27) est un négatif d'une surface usinée par électroérosion d'un outil de matriçage utilisé pour fabriquer le manchon expansible (3).
